**Europäisches Patentamt**

**European Patent Office**

**Office européen des brevets**

(19)

(11) Veröffentlichungsnummer : **0 264 000 B1**

## EUROPÄISCHE PATENTSCHRIFT

(12)

(45) Veröffentlichungstag der Patentschrift :
02.01.91 Patentblatt 91/01

(51) Int. Cl.$^5$ : **B01D 53/36, B01J 21/06**

(21) Anmeldenummer : **87113837.6**

(22) Anmeldetag : **22.09.87**

(54) **Katalysatorträgermaterial.**

Die Akte enthält technische Angaben, die nach
dem Eingang der Anmeldung eingereicht
wurden und die nicht in dieser Patentschrift
enthalten sind.

(30) Priorität : **30.09.86 DE 3633229**

(43) Veröffentlichungstag der Anmeldung :
**20.04.88 Patentblatt 88/16**

(45) Bekanntmachung des Hinweises auf die
Patenterteilung :
**02.01.91 Patentblatt 91/01**

(84) Benannte Vertragsstaaten :
**AT BE CH DE ES GB IT LI NL SE**

(56) Entgegenhaltungen :
**NL-A- 7 614 291**
**US-A- 4 188 365**

(73) Patentinhaber : **Siemens Aktiengesellschaft**
**Wittelsbacherplatz 2**
**D-8000 München 2 (DE)**

(72) Erfinder : **Hums, Erich, Dr.**
**Aschaffenburger Strasse 16**
**D-8520 Erlangen (DE)**

## Beschreibung

Die Erfindung bezieht sich auf ein Katalysatorträgermaterial, bestehend aus Titandioxid.

Zur Minderung der Stickoxide in Rauchgasen ist es bekannt, Katalysatoren zu verwenden, die als Trägermaterial Titandioxid enthalten und denen weitere Oxide wie z.B. Vanadiumoxid, Wolframoxid, Molybdänoxid in unterschiedlichen Mengen beigegeben wurden.

Ein solcher Katalysator ist beispielsweise in der DE-C- 24 58 888 offenbart. Es ist eine Eigenart solcher Katalysatoren, daß die katalytische Aktivität sehr stark davon abhängt, in welcher Modifikation bzw. Kristallstruktur das als Trägermaterial verwendete Titandioxid vorliegt. Bei der Reduktion der Stickoxide wird die Anastasmodifikation des Titandioxids bevorzugt. Die Verwendung der Rutilmodifikation führt dem gegenüber zu wesentlich geringeren katalytischen Aktivitäten.

Die Anastasmodifikation des Titandioxids neigt dazu, sich in die stabilere Rutilmodifikation umzuwandeln. Dieser Prozeß ist irreversibel. Die Umwandlung bzw. Phasentransformation von der einen Kristallstruktur in die andere stellt offensichtlich eine Kombination von zwei verschiedenen Prozessen dar : einem Keimbildungsprozeß mit relativ hoher Aktivierungsenergie und einem Keimwachstumsprozeß mit einer vergleichbar niedrigeren Aktivierungsenergie.

Die Phasentransformation kann durch Zugabe von Fremdionen beschleunigt werden. In der Kombination von Titandioxid in der Anastasmodifikation mit entsprechend aufgebrachten, katalytisch wirksamen Metallen, ist dieser Effekt der Rutilisierung zu berücksichtigen. Oftmals muß in Kauf genommen werden, daß die ungünstig gewählte, aber zwingende Kombination aus Trägermaterial und aufgebrachten Metallen zugleich einen Beschleunigungseffekt für die Rutilisierung darstellt. Untersuchungen über den Einfluß von $V_2O_5$ auf das Anastasgitter bei Verwendung von hydrothermal hergestelltem Titandioxid haben dies gezeigt. Auffallend größer ist dieser Beschleunigungseffekt bei der Verwendung von Kupfer, Nickel, Kobalt und Molybdänverbindungen. Dabei spielen die Ionengröße, die Ladung und die Tendenz, oktaedrisch koordiniert zu sein, eine wesentliche Rolle.

Der Erfindung liegt daher die Aufgabe zugrunde, unter hydrothermalen Bedingungen hergestelltes Titandioxid, welches in der Anastasmodifikation vorliegt, zu stabilisieren, um bei der Weiterverarbeitung mit anderen katalytisch aktiven Komponenten eine Umwandlung in die Rutilform zu unterdrücken.

Diese Aufgabe wird durch die Merkmale des Anspruchs 1 gelöst. Weitere vorteilhafte Weiterbildungen sind den Ansprüchen 2 bis 5 zu entnehmen.

Der Erfindung liegt die Erkenntnis zugrunde, daß die Umwandlung von der Anastasmodifikation in die Rutilmodifikation durch Zusätze zum Titandioxid auch behindert werden kann. Dabei wurde ermittelt, daß bestimmte Zusätze die Eigenschaft besitzen, das Keimwachstum im Kristallgefüge zu behindern.

In besonders vorteilhafter Weiterbildung der Erfindung kann die Anastasmodifikation durch Zusätze von Phosphat-, Sulfat-und/oder Borat-Ionen stabilisiert werden. Dabei kommt wahrscheinlich zum Tragen, daß diese Ionen beim Einbau in das Kristallgitter Zwischengitterplätze besetzen, die den Umwandlungsprozeß von der Anastasmodifikation in die Rutilmodifikation blockieren. Dabei wird von der Annahme ausgegangen, daß sich der Umwandlungsmechanismus im atomaren Bereich abspielt, wobei Sauerstoff-Fehlstellen im Anastasgitter diese Phasentransformation erleichtern, weil sie das Sauerstoffgerüst des Anastas umbilden und die Besetzung der neu entstandenen Gitterplätze durch Titan-Ionen begünstigen. Durch die beanspruchten Phosphat-, Sulfat- oder Borat-Ionen können dann in Umkehrung dieser Annahme Fremd-Ionen auf Zwischengitterplätzen diese Umwandlung hemmen. Zur Stabilisierung können auch seltene Erden verwendet werden. Ferner wurde gefunden, daß $Si^{4+}$-, $Al^{3+}$- und $Zr^{4+}$- Ionen verwendet werden können.

Bei der Herstellung eines solchen erfindungsgemäß stabilisierten hydrothermal hergestellten Titandioxid werden die Verfahrensschritte darauf abgestimmt, daß die rutilisierungshemmenden Zusätze vor dem Verfahrensschritt der Aufbauagglomeration von Meta- oder Orthotitansäure zugegeben werden. Dies kann beispielsweise dadurch geschehen, daß, nachdem die Meta- oder Orthotitansäure gereinigt vorliegt, Phosphat- und/oder Sulfatund/oder Borat- und/oder Lanthanverbindungen zugesetzt und dann unter erhöhtem Druck und Temperatur in einem Rührautoklaven behandelt werden.

## Ansprüche

1. Katalysatorträgermaterial bestehend aus Titandioxid, **dadurch gekennzeichnet,** daß Meta- und Orthotitansäure mit Zusätzen dotiert werden, die zur Stabilisierung des Anastas-Kristallgitters beitragen und dieses Gemisch unter hydrothermalen Bedingungen agglomeriert wird.

2. Katalysatorträgermaterial nach Anspruch 1, **dadurch gekennzeichnet,** daß zur Stabilisierung des Anastas-Kristallgitters Phosphat- und/oder Sulfat- und/oder Borat-Ionen verwendet werden.

3. Katalysatorträgermaterial nach Anspruch 1, **dadurch gekennzeichnet,** daß seltene Erden zur Stabilisierung des Anastas-Kristallgitters verwendet werden.

4. Katalysatorträgermaterial nach Anspruch 3, **dadurch gekennzeichnet,** daß zur Stabilisierung des Anastas-Kristallgitters Lanthanverbindungen verwendet werden.

5. Katalysatorträgermaterial nach Anspruch 1, dadurch gekennzeichnet, daß Si⁴⁺ und/oder Al³⁺ und/oder Zr⁴⁺ verwendet werden.

## Claims

1. Catalyst carrier material comprising titanium dioxide, characterised in that meta and ortho-titanic acid are doped with additives which contribute to the stabilisation of the anastase crystalline lattice, this mixture being agglomerated under hydrothermal conditions.

2. Catalyst carrier material according to claim 1, characterised in that phosphate and/or sulphate and/or borate ions are used for the stabilisation of the anastase crystalline lattice.

3. Catalyst carrier material according to claim 1, characterised in that rare earths are used for the stabilisation of the anastase crystalline lattice.

4. Catalyst carrier material according to claim 3, characterised in that lanthanum compounds are used for the stabilisation of the anastase crystalline lattice.

5. Catalyst carrier material according to claim 1, characterised in that $Si^{4+}$ and/or $Al^{3+}$ and/or $Zr^{4+}$ are used.

## Revendications

1. Support de catalyseur en dioxyde de titane, caractérisé en ce que l'acide métatitanique ou orthotitanique est dopé à l'aide d'additifs qui contribuent à la stabilisation du réseau cristallin d'anastase, et ce mélange est aggloméré dans des conditions hydrothermiques.

2. Support de catalyseur suivant la revendication 1, caractérisé en ce que, pour stabiliser le réseau cristallin d'anastase, des ions phosphate et/ou sulfate et/ou borate sont utilisés.

3. Support de catalyseur suivant la revendication 1, caractérisé en ce que des terres rares sont utilisées pour stabiliser le réseau cristallin d'anastase.

4. Support de catalyseur suivant la revendication 3, caractérisé en ce que des composés de lanthane sont utilisés pour stabiliser le réseau cristallin d'anastase.

5. Support de catalyseur suivant la revendication 1, caractérisé en ce que $Si^{4+}$ et/ou $Al^{3+}$ et/ou $Zr^{4+}$ sont utilisés.